# EUROPÄISCHE PATENTSCHRIFT

(11) **EP 3 587 612 B1**
(45) Veröffentlichungstag und Bekanntmachung des Hinweises auf die Patenterteilung: **08.12.2021**
(21) Anmeldenummer: 19181142.1
(22) Anmeldetag: 19.06.2019
(51) Int. Cl.: C22F 1/10, F16B 19/05, F16B 19/06, F01D 5/32

(54) **VERFAHREN ZUR HERSTELLUNG EINER BAUGRUPPE MIT FORMSCHLUSSVERBINDUNG UND BAUGRUPPE MIT FORMSCHLUSSVERBINDUNG MIT AUSSCHEIDUNGSHÄRTBAREM FORMSCHLUSSBEREICH**
METHOD FOR PRODUCING AN ASSEMBLY COMPRISING AN INTERLOCKING CONNECTION AND AN ASSEMBLY WITH AN INTERLOCKING CONNECTION WITH PRECIPITATION-HARDENABLE INTERLOCKING AREA
PROCÉDÉ DE FABRICATION D'UN MODULE À LIAISON PAR COMPLÉMENTARITÉ DE FORME ET MODULE À LIAISON PAR COMPLÉMENTARITÉ DE FORME POURVU DE ZONE DE LIAISON PAR COMPLÉMENTARITÉ DE FORME DURCIE PAR PRÉCIPITATION

(30) Priorität: 29.06.2018 DE 102018210743
(43) Veröffentlichungstag der Anmeldung: 01.01.2020
(73) Patentinhaber: MTU Aero Engines AG, 80995 München (DE)
(72) Erfinder: von Lautz, Julian, 80634 München (DE); Weiß, Michael, 85221 Dachau (DE); Schlemmer, Markus, 84048 Mainburg / Sandelzhausen (DE); Matuszewski, Kamil, 85757 Karlsfeld (DE); Kirzinger, Anna, 80686 München (DE)

(56) Entgegenhaltungen:
- EP-A1- 1 306 522
- US-A- 4 712 958
- US-A1- 2004 247 835
- US-A1- 2014 369 785
- DE RIJCK ET AL: "The driven rivet head dimensions as an indication of the fatigue performance of aircraft lap joints", INTERNATIONAL JOURNAL OF FATIGUE, ELSEVIER, AMSTERDAM, NL, Bd. 29, Nr. 12, 25. Oktober 2007 (2007-10-25), Seiten 2208-2218, XP022314348, ISSN: 0142-1123, DOI: 10.1016/J.IJFATIGUE.2006.12.010

## Beschreibung

### HINTERGRUND DER ERFINDUNG

### GEBIET DER ERFINDUNG

Die vorliegende Erfindung betrifft ein Verfahren zur Herstellung einer Baugruppe mit einer Formschlussverbindung mit einem ausscheidungsgehärteten Formschlussbereich sowie eine Baugruppe mit mindestens einem ausscheidungshärtbaren Formschlussbereich.

### STAND DER TECHNIK

Formschlüssige Verbindungen werden in vielen Bereichen der Technik zur Verbindung von Komponenten zu Baugruppen eingesetzt. Ein Beispiel hierfür sind Nieten, die zur Verbindung von Komponenten eingesetzt werden, wobei ein Niet beispielsweise als Stift in eine Durchgangsöffnung von zwei zu verbindenden Komponenten eingesetzt wird und die Enden des Stifts in Form von Nietköpfen dafür sorgen, dass der Niet nicht mehr aus der Durchgangsöffnung entfernt werden kann, wobei zumindest ein Nietkopf nach dem Einsetzen des Niets in die Durchgangsöffnung durch Verformung eines Endes des Niets erzeugt wird. Insbesondere können Nieten auch im Triebwerksbau für Flugzeugtriebwerke eingesetzt werden, um beispielsweise Komponenten von Gehäusebauteilen oder Strömungskanalbegrenzungen von Flugtriebwerken miteinander zu verbinden.

Weitere Beispiele für formschlüssige Verbindungen, die insbesondere auch im Triebwerksbau bei Flugtriebwerken eingesetzt werden, sind Quetschverbindungen, wie Verbindungen von profilierten Stiften mit Quetschhülsen, oder Sicherungselemente.

Bei Anwendungen in Strömungsmaschinen, wie Gasturbinen oder Flugtriebwerken, werden formschlüssige Verbindungen im Betrieb hohen Temperaturen ausgesetzt, wobei die formschlüssigen Verbindungen auch bei diesen hohen Temperaturen eine ausreichende Festigkeit zur sicheren Verbindung der Komponenten aufweisen müssen.

Entsprechend ist es vorteilhaft, wenn die verbundenen Komponenten und insbesondere deren Formschlussbereiche bei hohen Temperaturen eine hohe Festigkeit aufweist. Allerdings bedeutet dies, dass derartige Komponenten, wie Nieten oder Quetschhülsen, bei der Umformung zur Herstellung der entsprechenden Verbindung einen hohen Verformungswiderstand aufweisen, der möglicherweise nur geringe Umformungsgrade ermöglicht, sodass eine formschlüssige Verbindung durch Umformung aus einem hochfesten und insbesondere hochwarmfesten Werkstoff kaum oder nur sehr schwer herstellbar ist.

Komponenten aus ausscheidungshärtbaren Aluminiumlegierungen sind aus dem Dokument US4712958A1 und aus dem Artikel " The driven rivet head dimensions as an indication of the fatigue performance of aircraft lap joints", J.J.M. de Rijck et al., International Journal of Fatigue 29 (2007) 2208-2218 bekannt. Komponenten aus Nickelbasis- und Kobaltbasiswerkstoffen sind aus den Dokumenten US20040247835A1 und EP 1306522A1 bekannt. Teile aus einem Nickelbasiswerkstoff zur Ausbildung einer Formschlussverbindung sind aus der US20140369785A1 bekannt.

### OFFENBARUNG DER ERFINDUNG

### AUFGABE DER ERFINDUNG

Es ist deshalb Aufgabe der vorliegenden Erfindung ein Verfahren zur Herstellung einer formschlüssigen Verbindung aus einem hochfesten, insbesondere hochwarmfesten Werkstoff sowie eine Baugruppe aus formschlüssig verbundenen Komponenten, wie Nieten, Quetschelemente oder Sicherungselemente, bereitzustellen, die insbesondere im Flugtriebwerksbau einsetzbar sind. Hierbei sollen die formschlüssigen Verbindungen einfach herstellbar bzw. das entsprechende Verfahren einfach durchführbar sein, aber gleichwohl zuverlässige Verbindungen auch bei hohen Einsatztemperaturen ermöglichen.

### TECHNISCHE LÖSUNG

Diese Aufgabe wird gelöst durch ein Verfahren mit den Merkmalen des Anspruchs 1 sowie eine Baugruppe mit den Merkmalen des Anspruchs 13. Vorteilhafte Ausgestaltungen sind Gegenstand der abhängigen Ansprüche.

Gemäß der Erfindung wird eine formschlüssige Verbindung zur Verbindung von mindestens zwei Komponenten zu einer Baugruppe vorgesehen, bei der die zu verbindenden Komponenten Formschlussbereiche aufweisen, über die die miteinander verbundenen Komponenten in Kontakt gelangen können, um so mindestens einen Bewegungsfreiheitsgrad der verbundenen Komponenten zueinander einzuschränken, sodass eine formschlüssige Verbindung gegeben ist.

Beispielsweise kann ein Niet durch seine im Durchmesser vergrößerten Kopfbereiche, die Formschlussbereichen entsprechen, nicht mehr aus einer Durchgangsöffnung von zwei zu verbindenden Komponenten in Längsrichtung des Niets bzw. in axialer Richtung der Durchgangsöffnung entfernt werden, da die vergrößerten Kopfbereiche des Niets nicht durch die Durchgangsöffnung passen. Bei Quetschverbindungen, beispielsweise einer Quetschhülse, kann die Quetschhülse nicht mehr von einem Stift, auf dem die Quetschhülse angeordnet ist, entfernt werden, da die Quetschhülse nach dem Aufquetschen in entsprechende Vertiefungen hineinragt oder Vorsprünge des Stiftes umgibt. Darüber hinaus sind eine Vielzahl von weiteren, unterschiedlichen formschlüssigen Verbindungen denkbar, bei der mindestens zwei Komponenten aufgrund der Formgebung in mindestens einem Bewegungsfreiheitsgrad festgelegt sind.

Die vorliegende Erfindung schlägt nun vor, zur Herstellung einer Baugruppe mit einer Formschlussverbindung, bei der mindestens zwei Komponenten der Baugruppe formschlüssig miteinander verbunden werden, mindestens eine der Komponenten mit mindestens einem Verformungsformschlussbereich bereitzustellen, der zur Herstellung der formschlüssigen Verbindung nach einer gegenseitigen Anordnung der zu verbindenden Komponenten umgeformt wird, um die formschlüssige Verbindung herzustellen, wobei der Verformungsformschlussbereich aus einem Werkstoff gebildet ist, der durch Ausbildung von Ausscheidungen härtbar ist. Durch die Bereitstellung mindestens einer Komponente mit mindestens einem Verformungsformschlussbereich, der aus einem härtbaren Werkstoff hergestellt ist, ist es möglich die Verformung des Verformungsformschlussbereichs in einem Zustand des Verformungsformschlussbereichs durchzuführen, in dem dieser nicht gehärtet ist oder sich durch eine Lösungsglühung und nachfolgendes Abschrecken in einem nicht gehärteten Zustand befindet. Dadurch ist eine widerstandsärmere und somit einfachere Umformung des Verformungsformschlussbereichs möglich.

Nach der Umformung des Verformungsformschlussbereichs im nicht gehärteten Zustand wird der Verformungsformschlussbereich einer Auslagerungswärmebehandlung unterzogen, sodass der durch Ausscheidungen härtbare Werkstoff Ausscheidungen ausbildet und dadurch der Verformungsformschlussbereich gehärtet wird. Entsprechend liegt nach der Ausscheidungswärmebehandlung bzw. Auslagerungswärmebehandlung im Verformungsformschlussbereich ein gehärteter Werkstoff vor, der eine hohe Festigkeit und insbesondere auch hohe Warmfestigkeit aufweist. Entsprechend kann eine stabile und insbesondere auch bei hohen Temperaturen stabile formschlüssige Verbindung hergestellt werden. Durch die Verwendung eines Verformungsformschlussbereichs, der nach der Anordnung der zu verbindenden Komponenten zur Herstellung der formschlüssigen Verbindung im nicht ausgehärteten Zustand verformt wird, ist eine einfache Herstellung möglich, wobei nach der Auslagerungswärmebehandlung der durch den Verformungsformschlussbereich gebildete Formschlussbereich ebenfalls eine hohe Festigkeit und insbesondere Warmfestigkeit aufweist.

Die Auslagerungswärmebehandlung kann lokal begrenzt auf den örtlichen Bereich des Verformungsformschlussbereichs erfolgen. Alternativ kann auch die gesamte Komponente mit dem Verformungsformschlussbereich oder die gesamte Baugruppe mit den verbundenen Komponenten der entsprechenden Wärmebehandlung zur Ausscheidung der Ausscheidungen im Verformungsformschlussbereich unterzogen werden.

Die lokale Auslagerungswärmebehandlung des Verformungsformschlussbereich kann durch induktive Erwärmung und /oder eine energiereiche Strahlung, wie insbesondere Laserstrahlung, Elektronenstrahlung und / oder Infrarotstrahlung durchgeführt werden.

Die Auslagerungs - bzw. Ausscheidungswärmebehandlung kann bei temperaturbelasteten Baugruppen oder Komponenten, wie insbesondere bei Baugruppen von Gasturbinen oder Flugtriebwerken, erst im Betrieb bzw. beim Einsatz der Baugruppe oder Komponente mit dem noch nicht ausgehärteten Verbindungsformschlussbereich erfolgen.

Die Erfindung kann bei vielen unterschiedlichen formschlüssig Verbindungen eingesetzt werden, insbesondere bei Nieten, Quetschverbindung und / oder Sicherungselementen, insbesondere bei Hochtemperaturanwendungen, wie bei Baugruppen von Strömungsmaschinen, insbesondere Flugtriebwerken oder stationären Gasturbinen.

Beispielsweise kann ein Niet aus einem ausscheidungshärtbaren Werkstoff, wie beispielsweise einer Nickelbasis - Superlegierung ausgebildet werden, wobei der aushärtbare Werkstoff der Nietverbindung eine hohe Festigkeit und insbesondere Hochtemperaturfestigkeit verleiht. Um jedoch die Nietverbindung, die eine Umformung des Niets zur Herstellung einer formschlüssigen Verbindung mit dem genieteten Bauteil erfordert, leicht herstellen zu können, wird die Umformung des Niets in einem nicht ausgehärteten Zustand und insbesondere in einem lösungsgeglühten Zustand durchgeführt, da durch die geringere Festigkeit im lösungsgeglühten Zustand und die damit verbundenen möglichen höheren Umformgrade die Herstellung der Nietverbindung vereinfacht wird.

Entsprechend wird gemäß der vorliegenden Erfindung ein Niet aus einem ausscheidungshärtbaren Werkstoff nämlich aus einer Nickel - Basissuperlegierung oder einer Kobalt - Basislegierungen im nicht ausgehärteten Zustand bzw. im lösungsgeglühten Zustand bereitgestellt und nach Anordnen des Niets in dem Bauteil, in dem die Nietverbindung hergestellt werden soll, wird der Niet im nicht ausgehärteten Zustand bzw. im lösungsgeglühten Zustand zur Ausbildung der formschlüssigen Verbindung umgeformt.

Nach dem Umformen des Niets mit der Ausbildung mindestens eines Nietkopfs wird das Bauteil mit dem umgeformten Niet einer Auslagerungswärmebehandlung unterzogen, sodass die festigkeitserzeugenden Ausscheidungen ausgeschieden werden können. Nach der Ausscheidungswärmebehandlung liegt eine Nietverbindung mit einem hochfesten und insbesondere hochwarmfesten Niet vor, der durch die während der Ausscheidungswärmebehandlung gebildeten Ausscheidungen gehärtet ist.

Der Niet kann vorzugsweise einen stabförmigen, insbesondere zylindrischen Grundkörper aufweisen, an dessen axialen Enden mindestens ein oder zwei Verformungsformschlussbereiche vorgesehen sind, die bei der Herstellung der Nietverbindung umgeformt werden, um eine formschlüssige Verbindung mit den Komponenten, die verbunden werden, herzustellen.

Weitere Beispiele für formschlüssig Verbindungen, bei denen die vorliegende Erfindung angewandt werden kann, sind Quetschverbindungen oder Sicherungselemente, wie Sicherungsplatten, die die axiale Verschiebung eines Schaufelfußes in einer Schaufelfußnut einer rotierenden Scheibe einer Strömungsmaschine verhindern.

Eine Quetschverbindung kann beispielsweise durch eine Quetschhülse in Verbindung mit einem Stift hergestellt werden, wobei der Stift einen zylindrischen Grundkörper mit Vertiefungen und / oder Vorsprüngen aufweisen kann, an die sich nach einem Quetschvorgang die Quetschhülse formschlüssig anlegt. Beispielsweise können an dem zylindrischen Grundkörper eines Stiftes ringförmig umlaufende Nuten und / oder Vorsprünge vorgesehen sein und die Quetschhülse kann einen zylinderförmigen Verformungsformschlussbereich aufweisen, der auf den Stift im Bereich der Nuten oder Vorsprünge aufgeschrumpft wird.

Bei Sicherungsplatten zur axialen Sicherung von Laufschaufeln in einer rotierenden Scheibe kann eine Sicherungsplatte an ihren Enden in der Breite vergrößerte Bereiche aufweisen, die nach dem Einlegen der Sicherungsplatte in den Nutgrund aus der Nut hervorstehen und nach dem Umbiegen zur Anlage an die Scheibenstirnseiten ein axiales Verschieben innerhalb der Nut verhindern.

Die Umformung des Verformungsformschlussbereichs kann als Kaltumformung durchgeführt werden, sodass der Verformungsformschlussbereichs nach einer Lösungsglühbehandlung im abgekühlten bzw. abgeschreckten Zustand zur Herstellung der formschlüssigen Verbindung umgeformt wird.

Als Werkstoffe für den Verformungsformschlussbereich kommen erfindungsgemäß, insbesondere für die Anwendung im Hochtemperaturbereich, wie beispielsweise bei Laufschaufeln von Flugtriebwerken, ausscheidungshärtbare Nickel - oder Kobaltbasislegierungen zum Einsatz. Als Nickelbasis - Superlegierungen kommen beispielsweise Legierungen wie Inconel IN718, C263, Nimonic 80, MAR M247, SC 2000 oder PWA 1480 infrage.

Eine Lösungsglühbehandlung des ausscheidungshärtbaren Werkstoffs aus einer Nickelbasis - Superlegierung kann im Temperaturbereich von 900°C bis 1200°C, insbesondere 940°C bis 1065°C für 0,5 bis 5 h, insbesondere 1 bis 2 h durchgeführt werden

Die nach der Umformung des mindestens einen Verformungsformschlussbereichs anschließende Auslagerungswärmebehandlung kann bei Temperaturen von 550°C bis 850°C, insbesondere 620°C bis 790°C für 1 bis 15 h, insbesondere 2 bis 10 h durchgeführt werden.

### KURZBESCHREIBUNG DER FIGUREN

Die beigefügten Zeichnungen zeigen in rein schematischer Weise in
- Figur 1: eine Darstellung einer Nietverbindung von zwei Komponenten vor der Umformung des Niets,
- Figur 2: eine Darstellung einer Nietverbindung von zwei Komponenten nach der Umformung des Niets,
- Figur 3: eine Darstellung einer Quetschverbindung,
- Figur 4: eine perspektivische Darstellung einer Laufschaufel,
- Figuren 5 bis 7: Darstellungen einer Schaufelfußverbindung einer Laufschaufel mit einer Scheibe mit einer Sicherungsplatte zur axialen Sicherung des Schaufelfußes, wobei in den Teilbildern a) jeweils ein Querschnitt durch die Nut zur Aufnahme des Schaufelfußes sowie durch den Schaufelfuß quer zur Drehachse der Scheibe und in den Teilbildern b) ein axialer Längsschnitt durch die Nut zur Aufnahme des Schaufelfußes bzw. durch den Schaufelfuß gezeigt ist und in
- Figur 8: eine perspektivische Darstellung der Sicherungsplatte aus den Figuren 4 bis 6.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

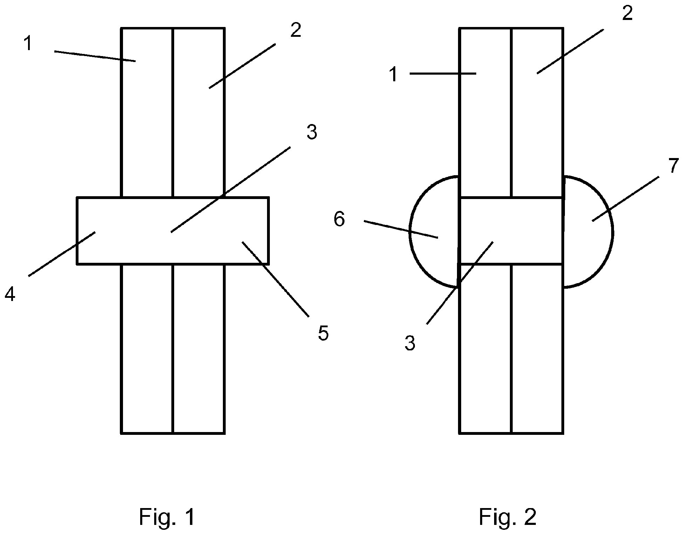

Die Figur 1 zeigt in einer rein schematischen Darstellung eine Nietverbindung bevor der Niet 3 zur Herstellung der Nietverbindung umgeformt worden ist. Die Nietverbindung der Figur 1 verbindet die Komponenten 1 und 2, wobei der Niet durch eine Öffnung in den Komponenten 1 und 2 hindurch gesteckt ist.

Der Niet 3 des gezeigten Ausführungsbeispiels weist eine zylindrische Stabform auf und hat an seinen axialen Enden zwei Verformungsformschlussbereiche 4 und 5, die bei der Herstellung der Nietverbindung umgeformt werden, sodass sich eine formschlüssige Verbindung ausbildet, die die Komponenten 1 und 2 zusammenhält.

Diese Situation nach der Umformung ist in Figur 2 dargestellt. Die Figur 2 zeigt den Niet 3 mit jeweils einem umgeformten Nietkopf 6, 7 an den jeweiligen axialen Enden des zylinderförmigen Grundkörpers des Niets 3. Die halbkugelförmigen Nietköpfe 6, 7 sind durch entsprechende Kaltverformung der Verformungsformschlussbereiche 4 und 5 des Niets 3 entstanden.

Anstelle der in dem Ausführungsbeispiel der Figuren 1 und 2 gezeigten Form des Niets 3 mit einem zylinderförmigen Grundkörper und halbkugelförmigen Nietköpfen 6, 7 nach der Umformung des Niets zur Herstellung der Nietverbindung können auch andere geeignete Formen des Niets und entsprechende andere Formen der umgeformten Bereiche Verwendung finden. Insbesondere können auch Niete eingesetzt werden, die nur einen Verformungsformschlussbereich besitzen und bereits einen vorgeformten Nietkopf aufweisen.

Nach einem erfindungsgemäßen Ausführungsbeispiel ist der Niet 3 aus einem ausscheidungshärtbaren Werkstoff gebildet, wobei beispielsweise eine Nickelbasis - Superlegierung gewählt werden kann, die durch intermetallische Ausscheidungen in Form von Ni₃(Al, Ti, Nb) - Ausscheidungen, den sogenannten γ' - Phasen, und / oder durch Karbide aushärtbar ist. Eine typische Nickelbasis - Superlegierung, die für einen erfindungsgemäßen Niet eingesetzt werden kann, wird unter der Handelsbezeichnung Inconel IN718 vertrieben und weist eine chemische Zusammensetzung mit 0,04 at.% Kohlenstoff, 19 at.% Chrom, 3 at.% Molybdän, 52,5 at.% Nickel, 0,9 at.% Aluminium, ≤ 0,1 at.% Kupfer, 5,1 at.% Niob, 0,9 % Titan und Rest Eisen sowie unvermeidbare Verunreinigungen auf.

Der Niet 3 aus einer entsprechenden ausscheidungshärtbaren Legierung, wie Inconel 718 wird im lösungsgeglühten Zustand in die durch die Komponenten 1, 2 hindurchgehende Öffnung eingesetzt und im lösungsgeglühten Zustand umgeformt. Die Lösungsglühung kann bei Inconel 718 im Temperaturbereich von 940°C bis 1065°C, beispielsweise bei 980°C für 1 Stunde durchgeführt werden. Nach dem Lösungsglühen wird der Niet 3 in Wasser oder Öl bzw. an Luft abgekühlt und kann dann im lösungsgeglühten Zustand zur Ausbildung der Nietverbindung in den Verformungsformschlussbereichen 4 und 5 an den axialen Enden des Niets 3 kalt umgeformt.

Nach der Umformung der Verformungsformschlussbereiche 4, 5 zu den umgeformten Nietköpfen 6, 7 wird das genietete Bauteil aus den Komponenten 1, 2 und dem Niet 3 einer Auslagerungswärmebehandlung unterzogen, die bei einer Temperatur von beispielsweise 700°C für 2 Stunden stattfinden kann. Während dieser Zeit kommt es zur Auslagerung von Ausscheidungen, beispielsweise zur Ausscheidung von γ' - Phasen bei der Legierung Inconel 718. Die bei der Auslagerungswärmebehandlung gebildeten Ausscheidungen verleihen dem Niet 3 eine hohe Festigkeit, insbesondere auch bei hohen Temperaturen. Nach der Auslagerungswärmebehandlung ist die Herstellung der Nietverbindung beendet.

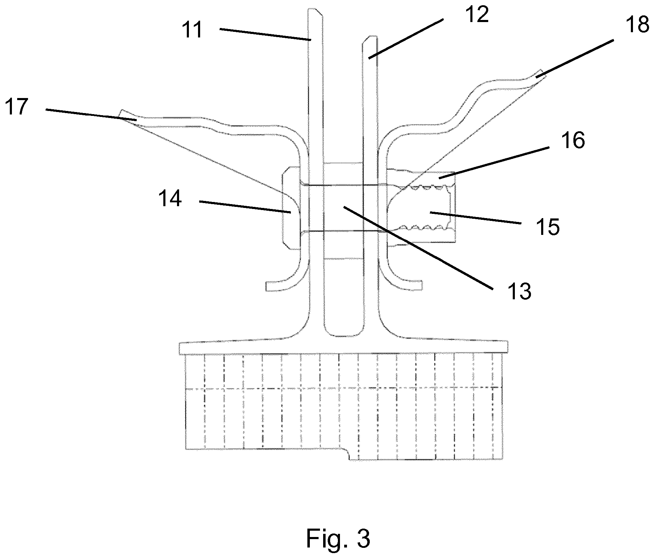

Ein weiteres Beispiel für eine erfindungsgemäße Baugruppe und die Herstellung derselben ist in Figur 3 für die Anordnung von Verkleidungen 17, 18 an Dichtfinnen 12, 13 in einem Flugtriebwerk gezeigt. Zur Anordnung der Verkleidungen 17, 18 wird ein Verbindungsstift 13 verwendet, welcher durch entsprechende Durchgangsöffnungen in den Dichtfinne 11, 12 und den Verkleidungen 17, 18 angeordnet ist. Der Verbindungsstift 13 weist einen Stiftkopf 14 auf, dessen Durchmesser größer ist als der Durchmesser des zylindrischen Stiftkörpers, sodass der Stiftkopf 14 nicht durch die Durchgangsöffnungen passt. An dem gegenüberliegenden Ende des Verbindungstifts 13 ist ein griffelter Bereich 15 ausgebildet, der mehrere ringförmig umlaufende Vertiefungen und Erhebungen an seiner Außenfläche aufweist. Zur Befestigung des Verbindungstifts 13 in der Durchgangsöffnung wird über dem griffelten Bereich 15 eine Quetschhülse 16 angeordnet, die über den griffelten Bereich 15 geschoben wird und dann auf den Verbindungsstift 13 gepresst wird, sodass die Quetschhülse 16 in die ringförmig umlaufenden Vertiefungen des griffelten Bereichs 15 des Verbindungstifts 13 eingreift und die ringförmigen Erhebungen des griffelten Bereichs 15 des Verbindungstifts 13 in die Innenfläche der Quetschhülse 16 eingreifen. Um eine leichte Verformung der Quetschhülse 16 zu ermöglichen, ist die Quetschhülse 16 ähnlich wie der erste Verformungsformschlussbereich 4 und der zweite Verformungsformschlussbereich 5 des Niets 3 des vorangegangenen Ausführungsbeispiels aus einem ausscheidungshärtbaren Werkstoff gebildet, der im lösungsgeglühten Zustand auf den geriffelten Bereich 15 des Verbindungstifts 13 gequetscht wird, um anschließend durch eine Auslagerungswärmebehandlung Ausscheidungen auszubilden und die Festigkeit der Quetschhülse 16 und somit der Verbindung zu erhöhen.

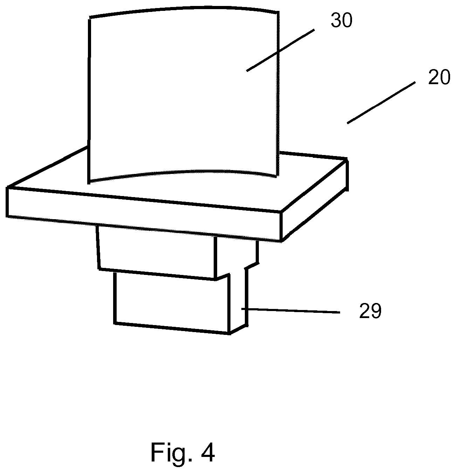

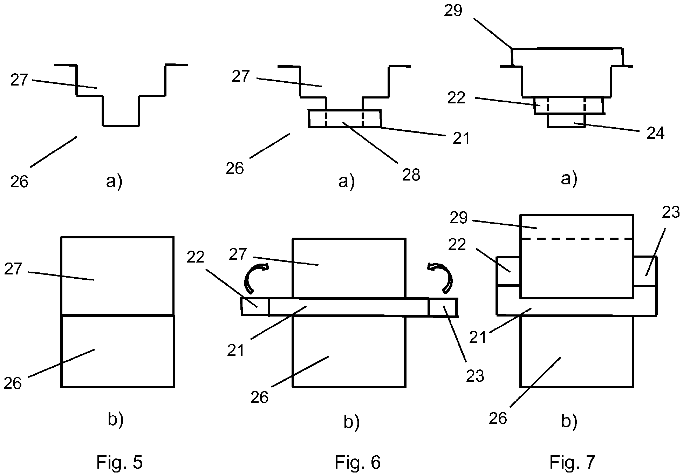

Ein weiteres Ausführungsbeispiel ist in den Figuren 4 bis 8 im Hinblick auf eine Sicherungsplatte 21 für die axiale Sicherung einer Laufschaufel 20 einer Strömungsmaschine, beispielsweise eines Flugtriebwerks, in einer Scheibe 26 gezeigt. Die Figur 4 zeigt in einer schematischen Darstellung eine Laufschaufel 20 mit einem Schaufelblatt 30 und einem Schaufelfuß 29, der in eine entsprechende Aufnahmenut 27 einer Scheibe 26 eingeführt wird. Eine Querschnittsdarstellung einer entsprechenden Aufnahmenut 27 in einer Scheibe 26 ist in der Figur 5 im Teilbild a) mit einem Querschnitt quer zur Längserstreckung der Aufnahmenut 27 gezeigt und im Teilbild b) der Figur 5 ist ein Längsschnitt entlang der Längsachse der Aufnahmenut 27 dargestellt.

Um die Laufschaufel 20 in axialer Richtung (bezogen auf die Drehachse der Scheibe) sicher in der Aufnahmenut 27 zu halten, wird in den Nutboden 28 der Aufnahmenut 27 eine Sicherungsplatte 21 eingelegt (siehe Fig. 6), deren Enden nach dem Einführen des Schaufelfußes 29 in die Aufnahmenut 27 so nach oben gebogen werden, dass die hochgebogenen Biegeenden 22 und 23 der Sicherungsplatte 21, die eine größere Breite B als der mittlere Bereich der Sicherungsplatte 21 aufweisen, an den Stirnflächen der Scheibe 26 anliegen, sodass die Sicherungsplatte 21 nicht mehr in axialer Richtung entsprechend der Länge L der Sicherungsplatte 21 durch die Aufnahmenut 27 geschoben werden kann. Dies ist in den Figuren 6 und 7 in den Teilbildern a) und b) gezeigt, wobei die Figur 6 die Sicherungsplatte 21 mit den Biegeenden 22 und 23 im unverformten Zustand zeigt, wie sie im Nutboden 28 der Aufnahmenut 27 angeordnet ist. Die Pfeile im Teilbild b) der Figur 6 zeigen wie die Biegeenden 22 und 23 der Sicherungsplatte 21 nach dem Einbringen der Laufschaufel bzw. des Schaufelfußes 29 einer Laufschaufel umgebogen werden, um den Schaufelfuß 29, wie in der Figur 7 im Teilbild b) gezeigt ist, in der Aufnahmenut 27 zu halten.

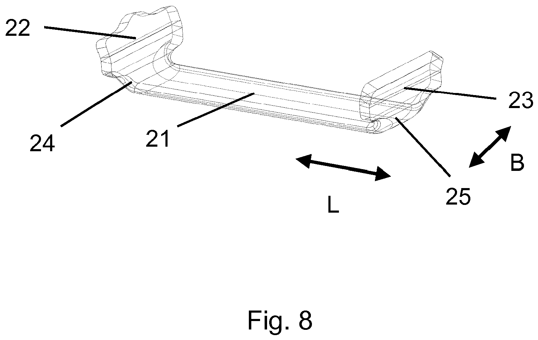

Die Figur 8 zeigt die Sicherungsplatte 21 in einer perspektivischen Darstellung in einem Betriebszustand, wenn die Biegeenden 22 und 23 bereits umgebogen sind und jeweils über die gekrümmten Bereiche 24 und 25 mit dem mittleren Bereich der Sicherungsplatte 21 verbunden sind, der eine geringere Breite B als die Biegeenden 22, 23 aufweist, um eine axiale Bewegung der Sicherungsplatte 21 durch die Aufnahmenut 27 zu verhindern. Die gekrümmten Bereiche 24 und 25 stellen die Verformungsformschlussbereiche dar, die zum Umbiegen der Biegeenden 22, 23 eine geringe Festigkeit aufweisen und nach der Verformung durch Ausscheidungshärtung verfestigt werden. Entsprechend sind die Sicherungsplatte 21 und insbesondere die gekrümmten Bereiche 24, 25 der Sicherungsplatte 21 aus einem ausscheidungshärtbaren Werkstoff gebildet, wobei die Sicherungsplatte 21 im geraden, ebenen, noch nicht gekrümmten Zustand in die Aufnahmenut 27 eingelegt wird und wobei die Bereiche, die anschließend umgebogen werden, in einem lösungsgeglühten Zustand des ausscheidungshärtbaren Werkstoffs vorliegen. Nach dem Einbringen der Laufschaufeln werden die Biegeenden 22, 23 umgebogen und die Sicherungsplatte bzw. die gekrümmten bereiche 24, 25 werden anschließend einer Auslagerungswärmebehandlung unterzogen, um die gekrümmten Bereiche 24 und 25 zu verfestigen.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: erste Komponente
- 2: zweite Komponente
- 3: Niet
- 4: erster Verformungsformschlussbereich des Niets
- 5: zweiter Verformungsformschlussbereich des Niets
- 6: erster umgeformter Nietkopf
- 7: zweiter umgeformter Nietkopf
- 11: Dichtfinne
- 12: Dichtfinne
- 13: Verbindungsstift
- 14: Sitftkopf
- 15: geriffelter Bereich
- 16: Quetschhülse
- 17: Verkleidung
- 18: Verkleidung
- 20: Laufschaufel
- 21: Sicherungsplatte
- 22: Biegeende
- 23: Biegeende
- 24: gekrümmter Bereich
- 25: gekrümmter Bereich
- 26: Scheibe
- 27: Aufnahmenut
- 28: Nutboden
- 29: Schaufelfuß
- 30: Schaufelblatt

## Patentansprüche

1. Verfahren zur Herstellung einer Baugruppe mit einer Formschlussverbindung mit einem ausscheidungsgehärteten Formschlussbereich,
bei dem mindestens zwei Komponenten einer Baugruppe (1,2,3;11,12,13,16,17,18;21,26,29) bereitgestellt werden, die formschlüssig miteinander verbunden werden, wobei jede der Komponenten einen Formschlussbereich aufweist, der mit mindestens einem anderen Formschlussbereich der anderen zu verbindenden Komponente in Kontakt gelangen kann, um durch die Einschränkung mindestens eines Bewegungsfreiheitsgrades der verbundenen Komponenten zueinander eine formschlüssige Verbindung herzustellen, wobei mindestens eine der Komponenten mindestens einen Verformungsformschlussbereich (4,5,6,7;16;24,25) zur Bereitstellung der formschlüssigen Verbindung aufweist, der zur Herstellung der formschlüssigen Verbindung nach einer Anordnung der zu verbindenden Komponenten zueinander umgeformt wird, um die formschlüssige Verbindung herzustellen, wobei der mindestens eine Verformungsformschlussbereich (4,5,6,7;16;24,25) aus einem Werkstoff gebildet ist, der durch Ausbildung von Ausscheidungen härtbar ist, wobei der Verformungsformschlussbereich (4,5,6,7;16;24,25) im nicht gehärteten Zustand bereitgestellt wird oder durch Lösungsglühen und nachfolgendes Abschrecken in einen nicht gehärteten Zustand gebracht wird, wobei die mindestens eine Komponente mit dem mindestens einen Verformungsformschlussbereich (4,5,6,7;16;24,25) im nicht gehärteten Zustand des Verformungsformschlussbereichs relativ zu mindestens einer anderen, zu verbindenden Komponente angeordnet wird und der mindestens ein Verformungsformschlussbereich (4,5,6,7;16;24,25) zur Ausbildung einer formschlüssigen Verbindung umgeformt wird,
wobei nach der Umformung des Verformungsformschlussbereichs (4,5,6,7;16;24,25) der Verformungsformschlussbereich (4,5,6,7;16;24,25) einer Auslagerungswärmebehandlung unterzogen wird, bei der der Verformungsformschlussbereich (4,5,6,7;16;24,25) durch Bildung von Ausscheidungen gehärtet wird, **dadurch gekennzeichnet, dass**
der Verformungsformschlussbereich (4,5,6,7;16;24,25) oder die Komponente mit dem Verformungsformschlussbereich (4,5,6,7;16;24,25) aus einem ausscheidungshärtbaren Nickelbasiswerkstoff oder einem ausscheidungshärtbaren Kobaltbasiswerkstoff ausgebildet ist.

2. Verfahren nach Anspruch 1,
**dadurch gekennzeichnet, dass**
zur Durchführung der Auslagerungswärmebehandlung der Verformungsformschlussbereich (4,5,6,7;16;24,25) lokal erwärmt wird oder die Komponente mit dem Verformungsformschlussbereich (4,5,6,7;16;24,25) oder die Baugruppe mit den verbundenen Komponenten erwärmt wird.

3. Verfahren nach Anspruch 1 oder 2,
**dadurch gekennzeichnet, dass**
die Auslagerungswärmebehandlung örtlich begrenzt mit Hilfe einer induktiven Erwärmung und / oder einer energiereichen Strahlung, insbesondere Laserstrahlung, Elektronenstrahlung und / oder Infrarotstrahlung erfolgt.

4. Verfahren nach einem der vorhergehenden Ansprüche,
**dadurch gekennzeichnet, dass**
die Auslagerungswärmebehandlung während des Betriebs oder des Einsatzes der Baugruppe erfolgt.

5. Verfahren nach einem der vorhergehenden Ansprüche,
**dadurch gekennzeichnet, dass**
die Baugruppe mindestens zwei oder drei Komponenten (1,2) umfasst, wobei eine Komponente ein Niet (3) ist, durch den zwei andere Komponenten (1,2) verbunden werden, oder wobei eine Komponente ein Stift (13) mit mindestens einer Vertiefung oder mindestens einem Vorsprung, insbesondere einer ringförmig umlaufenden Vertiefung oder einem ringförmig umlaufenden Vorsprung, ist und eine korrespondierende Komponente ein Quetschelement, insbesondere eine Quetschhülse (16), ist.

6. Verfahren nach einem der Ansprüche 1 bis 3,
**dadurch gekennzeichnet, dass**
die Komponente mit dem Verformungsformschlussbereich eine Sicherungsplatte (21) für eine Schaufelanordnung in einer Scheibe (26) einer Strömungsmaschine, insbesondere eines Flugtriebwerks oder einer Gasturbine ist.

7. Verfahren nach einem der Ansprüche 5 oder 6,
**dadurch gekennzeichnet, dass**
der Niet (3) mindestens einen, vorzugsweise zwei Verformungsformschlussbereiche (4,5) an den Enden des Niets aufweist oder die Quetschhülse (16) einen Verformungsformschlussbereich im Bereich eines Zylindermantels der Hülse aufweist oder die Sicherungsplatte (21) mindestens einen, vorzugsweise zwei Verformungsformschlussbereiche (24,25) an den Enden der Sicherungsplatte (21) aufweist.

8. Verfahren nach einem der vorhergehenden Ansprüche,
**dadurch gekennzeichnet, dass**
die Umformung des Verformungsformschlussbereichs (4,5,6,7;16;24,25) durch Kaltumformung erfolgt.

9. Verfahren nach einem der vorhergehenden Ansprüche,
**dadurch gekennzeichnet, dass**
der Verformungsformschlussbereich (4,5,6,7;16;24,25) oder die Komponente mit dem Verformungsformschlussbereich (4,5,6,7;16;24,25) aus einem ausscheidungshärtbaren Nickelbasiswerkstoff, nämlich IN 718, C263, Nimonic 80, MAR M247, SC 2000 oder PWA 1480 ausgebildet ist.

10. Verfahren nach einem der vorhergehenden Ansprüche,
**dadurch gekennzeichnet, dass**
die Lösungsglühbehandlung des Verformungsformschlussbereichs (4,5,6,7;16;24,25) aus einer Nickelbasissuperlegierung bei Temperaturen von 900°C bis 1200°C, insbesondere 940°C bis 1065°C für 0,5 bis 5 h, insbesondere 1 bis 2 h erfolgt.

11. Verfahren nach einem der vorhergehenden Ansprüche,
**dadurch gekennzeichnet, dass**
nach der Lösungsglühbehandlung die Abschreckung in Wasser oder Öl oder an Luft erfolgt.

12. Verfahren nach einem der vorhergehenden Ansprüche,
**dadurch gekennzeichnet, dass**
die Auslagerungswärmebehandlung der Baugruppe mit einem Verformungsformschlussbereich (4,5,6,7;16;24,25) aus einer Nickelbasissuperlegierung bei Temperaturen von 550°C bis 850°C, insbesondere 620°C bis 790°C für 1 bis 15 h, insbesondere 2 bis 10 h erfolgt

13. Baugruppe mit einer Formschlussverbindung mit einem ausscheidungshärtbaren Formschlussbereich (4,5,6,7;16;24,25), die mindestens zwei Komponenten umfasst, die formschlüssig miteinander verbunden sind, wobei jede der Komponenten einen Formschlussbereich aufweist, der mit mindestens einem anderen Formschlussbereich der anderen zu verbindenden Komponente in Kontakt steht und durch die Einschränkung mindestens eines Bewegungsfreiheitsgrades der verbundenen Komponenten zueinander eine formschlüssige Verbindung herstellt, wobei mindestens eine der Komponenten mindestens einen Verformungsformschlussbereich aufweist, der zur Herstellung der formschlüssigen Verbindung nach einer Anordnung der verbundenen Komponenten zueinander umgeformt ist, wobei der mindestens eine Verformungsformschlussbereich aus einem Nickelbasiswerkstoff oder einem Kobaltbasiswerkstoff gebildet ist, der durch Ausbildung von Ausscheidungen härtbar ist, wobei der Verformungsformschlussbereich im nicht gehärteten Zustand ist und im Betrieb oder im Einsatz der Baugruppe einer Temperaturbelastung unterzogen wird, die einer Ausscheidungswärmebehandlung entspricht, sodass im Verformungsformschlussbereich Ausscheidungen gebildet werden.

## Claims

1. Method for producing an assembly comprising a form-fitting connection having a precipitation-hardened form-fitting region,
in which at least two components of an assembly (1, 2, 3; 11, 12, 13, 16, 17, 18; 21, 26, 29) are provided that are interconnected in a form-fitting manner, each of the components having a form-fitting region which can come into contact with at least one other form-fitting region of the other componentto be connected in order to produce a form-fitting connection by limiting at least one degree of freedom of movement of the connected components relative to one another, at least one of the components having at least one deformation form-fitting region (4, 5, 6, 7; 16; 24, 25) for providing the form-fitting connection, which region is reshaped to produce the form-fitting connection after the components to be connected are arranged relative to one another, in order to produce the form-fitting connection, the at least one deformation form-fitting region (4, 5, 6, 7; 16; 24, 25) being formed from a material which can be hardened by the formation of precipitates, the deformation form-fitting region (4, 5, 6, 7; 16; 24, 25) being provided in a non-hardened state or being brought into a non-hardened state by solution annealing and subsequent quenching, the at least one component having the at least one deformation form-fitting region (4, 5, 6, 7; 16; 24, 25), in the non-hardened state of the deformation form-fitting region, being arranged relative to at least one other componentto be connected, and the at least one deformation form-fitting region (4, 5, 6, 7; 16; 24, 25) being reshaped to form a form-fitting connection,
the deformation form-fitting region (4, 5, 6, 7; 16; 24, 25), after the reshaping of the deformation form-fitting region (4, 5, 6, 7; 16; 24, 25), being subjected to an aging heat treatment in which the deformation form-fitting region (4,5,6,7; 16; 24,25) is hardened by the formation of precipitates, **characterized in that**
the deformation form-fitting region (4, 5, 6, 7; 16; 24, 25) or the component having the deformation form-fitting region (4, 5, 6, 7; 16; 24, 25) is formed from a precipitation-hardenable nickel-based material or a precipitation-hardenable cobalt-based material.

2. Method according to claim 1,
**characterized in that**
in order to carry out the aging heat treatment, the deformation form-fitting region (4, 5, 6, 7; 16; 24, 25) is locally heated or the component having the deformation form-fitting region (4, 5, 6, 7; 16; 24, 25) or the assembly having the connected components is heated.

3. Method according to either claim 1 or claim 2,
**characterized in that**
the aging heat treatment takes place in a locally limited manner by means of inductive heating and/or high-energy radiation, in particular laserradiation, electron radiation and/or infrared radiation.

4. Method according to any of the preceding claims,
**characterized in that**
the aging heat treatment takes place during operation or use of the assembly.

5. Method according to any of the preceding claims,
**characterized in that**
the assembly comprises at least two or three components (1, 2), one component being a rivet (3) by means of which two other components (1, 2) are connected, or one component being a pin (13) having at least one recess or at least one projection, in particularan annular circumferential recess or an annular circumferential projection, and a corresponding component being a crimping element, in particular a crimping sleeve (16).

6. Method according to any of claims 1 to 3,
**characterized in that**
the component having the deformation form-fitting region is a securing plate (21) for a blade arrangement in a disc (26) of a turbomachine, in particular an aircraft engine or a gas turbine.

7. Method according to either claim 5 or claim 6,
**characterized in that**
the rivet (3) has at least one, preferably two, deformation form-fitting regions (4, 5) at the ends of the rivet, or the crimping sleeve (16) has a deformation form-fitting region in the region of a cylinder outer surface of the sleeve, or the securing plate (21) has at least one, preferably two deformation form-fitting regions (24, 25) at the ends of the securing plate (21).

8. Method according to any of the preceding claims,
**characterized in that**
the deformation form-fitting region (4, 5, 6, 7; 16; 24, 25) is reshaped by cold forming.

9. Method according to any of the preceding claims,
**characterized in that**
the deformation form-fitting region (4, 5, 6, 7; 16; 24, 25) or the component having the deformation form-fitting region (4, 5, 6, 7; 16; 24, 25) is formed from a precipitation-hardenable nickel-based material, specifically IN718, C263, Nimonic 80, MAR M247, SC 2000 or PWA 1480.

10. Method according to any of the preceding claims,
**characterized in that**
the solution annealing treatment of the deformation form-fitting region (4, 5, 6, 7; 16; 24, 25) made of a nickel-based superalloy takes place at temperatures of 900°C to 1200°C, in particular 940°C to 1065°C, for 0.5 to 5 h, in particular 1 to 2 h.

11. Method according to any of the preceding claims,
**characterized in that**
quenching in water or oil or in air takes place after the solution annealing treatment.

12. Method according to any of the preceding claims,
**characterized in that**
the aging heat treatment of the assembly having a deformation form-fitting region (4, 5, 6, 7; 16; 24, 25) made of a nickel-based superalloy takes place at temperatures of 550°C to 850°C, in particular 620°C to 790°C, for 1 to 15 h, in particular 2 to 10 h.

13. Assembly comprising a form-fitting connection having a precipitation-hardenable form-fitting region (4, 5, 6, 7; 16; 24, 25), which comprises at least two components which are interconnected in a form-fitting manner, wherein each of the components has a fo rm-fitting region which is in contact with at least one other form-fitting region of the othercomponent to be connected and produces a form-fitting connection by limiting at least one degree of freedom of movement of the connected components relative to one another, wherein at least one of the components has at least one deformation form-fitting region which is reshaped to produce the form-fitting connection after the connected components are arranged relative to one another, wherein the at least one deformation form-fitting region is formed from a nickel-based material or a cobalt-based material which can be hardened by the formation of precipitates, wherein the deformation form-fitting region is in the non-hardened state and, during operation or use of the assembly, is subjected to a temperature load which corresponds to a precipitation heat treatment, such that precipitates are formed in the deformation form-fitting region.

## Revendications

1. Procédé destiné à la production d'un module comportant une liaison par complémentarité de forme comportant une zone de complémentarité de forme durcie par précipitation,
dans lequel au moins deux composants d'un module (1,2,3;11,12,13,16,17,18;21,26,29) sont fournis, lesquels sont reliés l'un à l'autre par complémentarité de forme, chacun des composants présentant une zone de complémentarité de forme qui peut entreren contact avec au moins une autre zone de complémentarité de forme de l'autre composant à relier afin de produire une liaison par complémentarité de forme en restreignant au moins un degré de liberté de mouvement des composants reliés l'un à l'autre, au moins un des composants présentant au moins une zone de complémentarité de forme de déformation (4,5,6,7;16;24,25) destinée à fournir la liaison par complémentarité de forme et qui est transformée pour produire la liaison par complémentarité de forme après un agencement des composants à relier l'un à l'autre, afin de produire la liaison par complémentarité de forme, l'au moins une zone de complémentarité de forme de déformation (4,5,6,7;16;24,25) étant formée à partir d'un matériau durcissable parformation de précipités, la zone de complémentarité de forme de déformation (4,5,6,7;16;24,25) étant fournie à l'état non durci ou étant amenée à un état non durci par un recuit de mise en solution et une trempe ultérieure, l'au moins un composant comportant l'au moins une zone de complémentarité de forme de déformation (4,5,6,7;16;24,25) étant disposé par rapport à au moins un autre composant à relier à l'état non durci de la zone de complémentarité de forme de déformation et l'au moins une zone de complémentarité de forme de déformation (4,5,6,7;16;24,25) étant transformée pour former une liaison par complémentarité de forme,
la zone de complémentarité de forme de déformation (4,5,6,7;16;24,25) étant soumise à un traitement thermique de durcissement par vieillissement, après la transformation de la zone de complémentarité de forme de déformation (4,5,6,7;16;24,25), la zone de complémentarité de forme de déformation (4,5,6,7;16;24,25) étant durcie par formation de précipités dans ledit traitement thermique de durcissement par vieillissement, **caractérisé en ce que**
la zone de complémentarité de forme de déformation (4,5,6,7;16;24,25) ou le composant comportant la zone de complémentarité de forme de déformation (4,5,6,7;16;24,25) est réalisé(e) à partir d'un matériau à base de nickel durcissable par précipitation ou d'un matériau à base de cobalt durcissable par précipitation.

2. Procédé selon la revendication 1,
**caractérisé en ce que**
pour effectuer le traitement thermique de durcissement par vieillissement, la zone de complémentarité de forme de déformation (4,5,6,7;16;24,25) est chauffée localement ou le composant comportant la zone de complémentarité de forme de déformation (4,5,6,7;16;24,25) ou le module comportant les composants reliés est chauffé.

3. Procédé selon la revendication 1 ou 2,
**caractérisé en ce que**
le traitement thermique de durcissement par vieillissement est limité localement à l'aide d'un chauffage inductif et/ou d'un rayonnement à haute énergie, en particulier un rayonnement laser, un rayonnement électronique et/ou un rayonnement infrarouge.

4. Procédé selon l'une des revendications précédentes,
**caractérisé en ce que**
le traitement thermique de durcissement par vieillissement a lieu pendant le fonctionnement ou l'utilisation du module.

5. Procédé selon l'une des revendications précédentes,
**caractérisé en ce que**
le module comprend au moins deuxou trois composants (1,2), un composant étant un rivet (3) par lequel deuxautres composants (1,2) sont reliés, ou un composant étant une goupille (13) comportant au moins un évidement ou au moins une saillie, en particulier un évidement circonférentiel annulaire ou une saillie circonférentielle annulaire, et un composant correspondant étant un élément de serrage, en particulier un manchon de serrage (16).

6. Procédé selon l'une des revendications 1 à 3,
**caractérisé en ce que**
le composant comportant la zone de complémentarité de forme de déformation est une plaque de fixation (21) pour un agencement d'aubes dans un disque (26) d'une turbomachine, en particulier d'un moteur d'aéronef ou d'une turbine à gaz.

7. Procédé selon l'une des revendications 5 ou 6,
**caractérisé en ce que**
le rivet (3) présente au moins une, de préférence deux, zones de complémentarité de forme de déformation (4,5) aux extrémités du rivet ou le manchon de serrage (16) présente une zone de complémentarité de forme de déformation dans la zone d'une enveloppe cylindrique du manchon ou la plaque de fixation (21) présente au moins une, de préférence deux, zones de complémentarité de forme de déformation (24,25) aux extrémités de la plaque de fixation (21).

8. Procédé selon l'une des revendications précédentes,
**caractérisé en ce que**
la transformation de la zone de complémentarité de forme de déformation (4,5,6,7;16;24,25) a lieu par formage à froid.

9. Procédé selon l'une des revendications précédentes,
**caractérisé en ce que**
la zone de complémentarité de forme de déformation (4,5,6,7;16;24,25) ou le composant comportant la zone de complémentarité de forme de déformation (4,5,6,7;16;24,25) est réalisé(e) à partir d'un matériau à base de nickel durcissable par précipitation, à savoir IN 718, C263, Nimonic 80, MAR M247, SC 2 000 ou PWA 1 480.

10. Procédé selon l'une des revendications précédentes,
**caractérisé en ce que**
le traitement par recuit de mise en solution de la zone de complémentarité de forme de déformation (4,5,6,7;16;24,25) a lieu à partir d'un superalliage à base de nickel à des températures de 900 °C à 1 200 °C, en particulierde 940 °C à 1 065 °C, pendant 0,5 à 5 h, en particulier 1 à 2 heures.

11. Procédé selon l'une des revendications précédentes,
**caractérisé en ce que**
après le traitement par recuit de mise en solution, la trempe a lieu dans de l'eau ou de l'huile ou à l'air.

12. Procédé selon l'une des revendications précédentes,
**caractérisé en ce que**
le traitement thermique de durcissement par vieillissement du module comportant une zone de complémentarité de forme de déformation (4,5,6,7;16;24,25) a lieu à partir d'un superalliage à base de nickel à des températures de 550 °C à 850 °C, en particulier de 620 °C à 790 °C, pendant 1 à 15 heures, en particulier 2 à 10 heures

13. Module comportant une liaison par complémentarité de forme comportant une zone de complémentarité de forme (4,5,6,7;16;24,25) durcissable par précipitation, laquelle comprend au moins deux composants qui sont reliés l'un à l'autre par complémentarité de forme, chacun des composants présentant une zone de complémentarité de forme qui entre en contact avec au moins une autre zone de complémentarité de forme de l'autre composant à relier et produit une liaison par complémentarité de forme en restreignant au moins un degré de liberté de mouvement des composants reliés l'un à l'autre, au moins un des composants présentant au moins une zone de complémentarité de forme de déformation qui est transformée pour produire la liaison par complémentarité de forme après un agencement des composants reliés l'un à l'autre, l'au moins une zone de complémentarité de forme de déformation étant formée à partir d'un matériau à base de nickel ou d'un matériau à base de cobalt durcissable par formation de précipités, la zone de complémentarité de forme de déformation étant à l'état non durci et étant soumise à une sollicitation thermique lors du fonctionnement ou de l'utilisation du module, laquelle correspond à un traitement thermique par précipitation, de sorte que des précipités sont formés dans la zone de complémentarité de forme de déformation.
